# EUROPÄISCHE PATENTSCHRIFT

(11) **EP 3 927 565 B1**
(45) Veröffentlichungstag und Bekanntmachung des Hinweises auf die Patenterteilung: **18.01.2023**
(21) Anmeldenummer: 20704508.9
(22) Anmeldetag: 07.02.2020
(51) Int. Cl.: B60G 21/055, F16F 1/16, F16F 1/38

(54) **STABILISATORSCHELLE, STABILISATOR-STABILISATORSCHELLEN-ANORDNUNG UND VERFAHREN ZUM HERSTELLEN EINER STABILISATORSCHELLE**
ANTI-ROLL BAR CLAMP, ANTI-ROLL BAR/ANTI-ROLL BAR CLAMP ASSEMBLY, AND METHOD FOR PRODUCING AN ANTI-ROLL BAR CLAMP
BRIDE DE STABILISATEUR, ENSEMBLE STABILISATEUR-BRIDE DE STABILISATEUR ET PROCÉDÉ DE FABRICATION D'UNE BRIDE DE STABILISATEUR

(30) Priorität: 20.02.2019 DE 102019202306
(43) Veröffentlichungstag der Anmeldung: 29.12.2021
(73) Patentinhaber: ThyssenKrupp Federn und Stabilisatoren GmbH, 58119 Hagen (DE); thyssenkrupp AG, 45143 Essen (DE)
(72) Erfinder: BESTING, Patrick, 57439 Attendorn (DE); BERNARD, Sebastian, 51069 Köln (DE)
(74) Vertreter: thyssenkrupp Intellectual Property GmbH
(86) Internationale Anmeldenummer: PCT/EP2020/053147
(87) Internationale Veröffentlichungsnummer: WO 2020/169367

(56) Entgegenhaltungen:
- EP-A1- 3 326 846
- WO-A1-03/004901
- DE-A1-102005 028 621
- US-A1- 2003 111 817

## Beschreibung

Die vorliegende Erfindung betrifft eine Stabilisatorschelle, eine Stabilisator-Stabilisatorschellen-Anordnung als auch ein Verfahren zum Herstellen einer Stabilisatorschelle.

### Stand der Technik

(Fahrzeug)stabilisatoren für (Kraft)fahrzeuge sind im Stand der Technik in einer Vielzahl von Ausführungsformen bekannt und werden beispielsweise auch als Stabilisatoren, Stabilisierungsdrehstäbe oder Torsionsfederstäbe bezeichnet. Diese stabilisierenden Drehstäbe dienen der Stabilisierung gegen Neigung und Verwindung der Karosserie insbesondere bei Kurvenfahrt und Abstimmung des Fahrverhaltens eines (Kraft)fahrzeugs. Solche Stabilisatoren sind üblicherweise im Bereich der Vorder- und der Hinterachse angeordnet und erstrecken sich zumeist über die gesamte Breite des Fahrzeugs. Die Befestigung solcher Stabilisatoren an dem Fahrwerk einerseits und der Karosserie andererseits beinhaltet das Problem, dass die an dem Fahrwerk ankommenden, entstehenden und/oder von dem Fahrwerk aufgenommenen Vibrationen, Schwingungen und Geräuschen, wie beispielsweise Rad- und Fahrbahngeräusche über die Befestigung auf die Karosserie und somit auch in die Fahrgastzelle übertragen werden. Um diese Übertragung zu dämpfen, insbesondere zu verringern, werden die Stabilisatoren üblicherweise dämpfend über Stabilisatorlager befestigt. Diese Stabilisatorlager sind im Stand der Technik auch als Hülsenlager bekannt, welche eine starre Außenhülse, auch als Stabilisatorschelle bezeichnet und eines koaxial im Innenbereich dieser Stabilisatorschelle angeordnetes elastisches Einlegeelement aufweisen. Ebenso bekannt ist die Anordnung eines elastischen Einlegeelements an einem Stabilisatorstab, wobei der Stabilisatorstab über die an demselbigen angeordneten elastischen Einlegeelements mit der Stabilisatorschelle an einem Fahrzeugunterboden befestigt wird. Allgemein besteht eine starre Stabilisatorschelle, welche an einem Fahrzeugunterboden befestigt wird, wobei innerhalb dieser Stabilisatorschelle ein elastisches Einlegeelement, welches koaxial um einen Stabilisator angeordnet ist. Diese vorgenannten Lager können hinsichtlich ihrer Wirkweise in Gleitlager, Klemmlager, Haftlager und Klebelager unterschieden werden.

Für die Befestigung der Stabilisatorlager an dem Fahrwerk und der Karosserie sind im Stand der Technik eine Vielzahl von Anordnungen und Befestigungsmöglichkeiten bekannt, welche die Grundfunktion des Stabilisatorlagers nicht verändern. Beispielsweise kann ein Stabilisatorlager mit einer Stabilisatorschelle an dem Fahrwerk und/oder der Karosserie befestigt werden.

Problematisch ist, dass der Montageprozess der Anbringung von Stabilisatorschellen an dem Fahrwerk und/oder der Karosserie insbesondere aufwendig in mehreren Verfahrensschritten, difiziel, fehleranfällig und kostenintensiv ist. Das Dokument EP 3 326 846 offenbart eine Stabilisatorschelle nach dem Oberbegriff des Anspruchs 1. Die Dokumente WO 03/004901 und DE 10 2005 028621 offenbaren andere Stabilisatorschellen.

Der vorliegenden Erfindung liegt daher die Aufgabe zugrunde, eine verbesserte Stabilsatorschelle und/oder eine Stabilisator-Stabilisatorschellen-Anordnung und ein verbessertes Verfahren zum Herstellen einer Stabilisator-Stabilisatorschellen-Anordnung, bereitzustellen, bei welchem die zuvor genannten Nachteile vermieden werden. Insbesondere soll es mit dieser verbesserten Stabilsatorschelle und/oder der Stabilisator-Stabilisatorschellen-Anordnung und dem verbesserten Verfahren zum Herstellen einer Stabilisator-Stabilisatorschellen-Anordnung, möglich sein, eine einfache, für Fehler unanfällige, pass-, prozess- und zeitoptimierte Anbringung an einem Fahrzeug, insbesondere Fahrwerk zu ermöglichen. Zudem soll das verbesserte Verfahren zum Herstellen einer Stabilisator-Stabilisatorschellen-Anordnung, umfassend ein Stabilisator-Klebelager, einfach und sicher in bereits bestehende Verfahren implementiert werden können.

### Offenbarung der Erfindung

Diese Aufgabe wird mit einer Stabilisatorschelle nach Anspruch 1 und einer Stabilisator-Stabilisatorschellen-Anordnung nach Anspruch 7 und einem Verfahren zum Herstellen einer Stabilisator-Stabilisatorschellen-Anordnung nach Anspruch 8 gelöst.

Die erfindungsgemäße Stabilisatorschelle weist gegenüber konventionellen Stabilisatorschellen den Vorteil auf, dass einerseits die Montage der Stabilisatorschellen an dem Fahrwerk und/oder der Karosserie minimalistisch, passgenau, einfach, fehlerfrei und kostenoptimiert durchgeführt werden kann und andererseits gleichzeitig bei Anordnung eines Stabilisators in der Stabilisatorschelle eine gewünschte Vorspannung einfach, sicher und fehlerfrei bereitgestellt wird. Insbesondere sind im Stand der Technik bekannte Überstände, welche beispielsweise durch überstehende Schraubverbindungen gegeben sind in der erfindungsgemäßen Verbindung insbesondere durch eine nach dem Fügeprozess versenkte Niet, nicht vorhanden und eine ebene Verbindung, insbesondere erhebungsfreie Schraubenauflagefläche realisiert werden kann. Des Weiteren sind für die Montage, insbesondere zum Schließen der Stabilisatorschelle keine zusätzlichen Bauteile, insbesondere Verbindungselemente erforderlich, welche erst aufwendig zusätzlich an der Stabilisatorschelle angeordnet werden müssten und beispielsweise verloren gehen könnten.

Die erfindungsgemäße Stabilisator-Stabilisatorschellen-Anordnung weist gegenüber konventionellen Stabilisator-Stabilisatorschellen-Anordnung den Vorteil auf, dass die Montage der Stabilisator-Stabilisatorschellen-Anordnung an dem Fahrwerk und/oder der Karosserie einfach, fehlerfrei und kostenoptimiert durchgeführt werden kann. Des Weiteren sind für die Montage, insbesondere zum Schließen der Stabilisatorschelle keine zusätzlichen Bauteile, insbesondere Verbindungselemente erforderlich, welche erst aufwendig zusätzlich an der Stabilisatorschelle angeordnet werden müssten und beispielsweise verloren gehen könnten

Das erfindungsgemäße Verfahren zum Herstellen einer Stabilisator-Stabilisatorschellen-Anordnung weist gegenüber konventionellen Verfahren den Vorteil auf, dass der Gesamtprozess optimiert, insbesondere eine höhere Montagegeschwindigkeit, beispielsweise auch durch Einsparung von aufwendigen Zwischenschritten, insbesondere die Anordnung einer Gegendruckvorrichtung zur Vernietung, durch eine verminderte Anzahl an zu montierenden Elementen, insbesondere separaten Verbindungselementen und auch automatisiert werden kann. Ein weiterer Vorteil des erfindungsgemäßen Verfahrens ist, dass es in bereits bestehende Verfahren einfach und zuverlässig integriert werden kann.

Gegenstand der Erfindung ist daher eine Stabilisatorschelle für einen Fahrzeugstabilisator, umfassend einen Innenbereich zur Aufnahme für einen Fahrzeugstabilisator und mindestens zwei sich wenigstens teilweise gegenüberliegende Endbereiche zum Schließen der Stabilisatorschelle, wobei der eine der mindestens zwei sich wenigstens teilweise gegenüberliegenden Endbereiche mindestens ein Verbindungselement und der andere der mindestens zwei sich wenigstens teilweise gegenüberliegenden Endbereiche mindestens eine Verbindungselementaufnahme zur Herstellung wenigstens einer formschlüssigen Verbindung zwischen dem mindestens einem Verbindungselement und der mindestens einen Verbindungselementaufnahme aufweist, wobei das mindestens eine Verbindungselement mindestens eine Niet und die mindestens eine Verbindungselementaufnahme mindestens ein Nietloch ist und die herstellbare wenigstens formschlüssige Verbindung wenigstens eine Nietverbindung ist, wobei die mindestens eine Niet einstückig mit der Stabilisatorschelle ausgebildet ist, wobei die mindestens eine Niet massiv ausgebildet ist.

Ein weiterer Gegenstand der Erfindung ist eine Stabilisator-Stabilisatorschellen-Anordnung umfassend einen Stabilisator, ein Einlegeelement und eine Stabilisatorschelle, wie oben beschrieben, wobei im Innenbereich der Stabilisatorschelle das Einlegelement und der Stabilisator koaxial angeordnet sind, wobei das Einlegelement den Stabilisator wenigstens teilweise umgibt.

Ein weiterer Gegenstand der Erfindung ist ein Verfahren zum Herstellen einer Stabilisator-Stabilisatorschellen-Anordnung umfassend die folgenden Schritte:
a) Bereitstellen einer Stabilisatorschelle nach einem der Ansprüche 1 bis 6, die Stabilisatorschelle wenigstens umfassend einen Innenbereich zur Aufnahme für einen Fahrzeugstabilisator und mindestens zwei sich wenigstens teilweise gegenüberliegende Endbereiche zum Schließen der Stabilisatorschelle, wobei der eine der mindestens zwei sich wenigstens teilweise gegenüberliegenden Endbereiche mindestens ein Verbindungselement und der andere der mindestens zwei sich wenigstens teilweise gegenüberliegenden Endbereiche mindestens eine Verbindungselementaufnahme zur Herstellung wenigstens einer formschlüssigen Verbindung zwischen dem mindestens einem Verbindungselement und der mindestens einen Verbindungselementaufnahme aufweist, wobei das mindestens eine Verbindungselement mindestens eine Niet und die mindestens eine Verbindungselementaufnahme mindestens ein Nietloch ist;
b) Bereitstellen eines Stabilisators für ein Fahrzeug, insbesondere ein (Kraft)fahrzeug;
c) Bereitstellen mindestens eines elastischen Einlegeelements;
d)
   i. Einlegen des in Schritt c) bereitgestellten mindestens einen elastischen Einlegeelements in den Innenbereich der in Schritt a) bereitgestellten Stabilisatorschelle unter Herstellung einer Stabilisatorschelle mit Einlage, oder
   ii. Anordnen des in Schritt c) bereitgestellten mindestens einen elastischen Einlegeelements an dem in Schritt b) bereitgestellten Stabilisators unter Herstellung einer Stabilisators mit angeordneter Einlage;
e)
   i. Anordnen der in Schritt d)i. hergestellten Stabilisatorschelle mit Einlage um den in Schritt b) bereitgestellten Stabilisator, oder
   ii. Anordnen der in Schritt a) bereitgestellten Stablisatorschelle um den in Schritt d)ii. hergestellten Stabilisator mit angeordneter Einlage;
f) Schließen der in Schritt e)i. oder e)ii. um den Stabilisator und das mindestens eine elastische Einlegeelement angeordneten Stabilisatorschelle, wobei die mindestens zwei sich wenigstens teilweise gegenüberliegenden Endbereiche der Stabilisatorschelle derart angeordnet werden, dass die mindestens eine Niet in das mindestens eine Nietloch eingeführt ist;
g) Vernieten der in Schritt f) in das mindestens eine Nietloch eingeführten Niet unter Herstellung einer wenigstens formschlüssigen Verbindung.

Ein weiterer Gegenstand der Erfindung ist die Verwendung eines Stabilisators und einer Stabilisatorschelle, wie oben beschrieben, insbesondere Fahrzeugstabilisators zur Anordnung der Stabilisatorschelle.

Die Erfindung kann sowohl in der Stabilisatorschelle als auch in einer Stabilisator-Stabilisatorschellen-Anordnung als auch in einem Verfahren zum Herstellen einer Stabilisatorschelle als auch in der Verwendung eines Stabilisators verwirklicht sein.

### Detaillierte Beschreibung der Erfindung

Beispielsweise ist die geometrische Grundfläche einer Niet und zugeordneten Nietloch ausgewählt aus einer Gruppe eines Polygons, insbesondere eines Trigon, eines Tetragon, eines Pentagon, eines Hexagon, eines Heptagon, eines Oktogon, eines Nonagon, eines Dekagon, eines Hendekagon, eines Dodekagon, einer Elipse, insbesondere eines Kreises oder einer Kombination hiervon. Erfindungsgemäß ist die mindestens eine Niet massiv ausgebildet.

Nach einer bevorzugten Ausführungsform der Erfindung weist die Stabilisatorschelle mindestens zwei Nieten und mindestens zwei Nietlöcher auf, wobei die mindestens zwei Nieten und die mindestens zwei Nietlöcher jeweils gleichseitig oder wechselseitig angeordnet sind.

Im Rahmen der vorliegenden Erfindung wird unter einer gleichseitigen Anordnung eine Anordnung verstanden, bei welcher die mindestens zwei Nieten oder die mindestens zwei Nietlöcher auf dem gleichen der sich einander gegenüberliegenden Endbereichen angeordnet sind.

Unter wechselseitiger Anordnung wird im Rahmen der vorliegenden Erfindung eine Anordnung verstanden, bei welcher die mindestens zwei Nieten oder die mindestens zwei Nietlöcher nicht auf dem gleichen der sich einander gegenüberliegenden Endbereichen angeordnet sind.

Erfindungsgemäß ist die mindestens eine Niet einstückig mit der Stabilisatorschelle ausgebildet.

Somit sind keine weiteren Verbindungselemente, insbesondere Fügebauteile für zum Schließen der Stabilisatorschelle erforderlich. Die Verbindungselemente, insbesondere der Fügebereich werden aus der Stabilisatorschelle selbst generiert. Hiermit ist insbesondere eine Einsparung zusätzlicher Verbindungselemente, insbesondere Fügebauteile (wie z.B. lose Nieten, welche in einem weiteren Montageschritt zugeführt und angeordnet werden müssten) möglich. Insbesondere mit Ausbildung des Nietbereiches an der Stabilisatorschelle weisen Nietbereich und Stabilisatorschelle die gleiche Materialzusammensetzung und gleichen Materialeigenschaften, wie beispielsweise gleiche Festigkeitseigenschaften auf, was insbesondere auch vorteilhafte Auswirkungen auf Korrosionseigenschaften hat. Beispielsweise ist zum Schließen der Stabilisatorschelle kein (zusätzlicher) Gegenhalter sowie keine Nietunterlage für den Nietprozess erforderlich, da die Nietunterlage durch die Stabilisatorschelle selbst ausgebildet ist.

Im Rahmen der vorliegenden Erfindung wird unter einstückig verstanden, dass kein Stück zerstörungsfrei in mehrere Stücke geteilt werden kann.

In einer bevorzugten Ausführungsform der Erfindung ist die Stabilisatorschelle einstückig, insbesondere aus einem Stück gestanzt oder mehrstückig, insbesondere zweistückig, dreistückig ausgebildet. Beispielsweise ist die gestanzte Stabilisatorschelle im Wesentlichen hergestellt als ein Stanzbiegeteil.

Im Rahmen der vorliegenden Erfindung wird unter einstückig ein Stück verstanden, welches nur durch Zerstörung von Material in mehrere Stücke geteilt werden kann.

Gemäß einer bevorzugten Ausführungsform der Erfindung weist wenigstens einer der mindestens zwei sich wenigstens teilweise gegenüberliegenden Endbereiche mindestens ein Anbindungselement zur Anbindung an ein Fahrzeug, insbesondere an ein Fahrzeugchassis, ein Fahrzeugfahrwerk, einen Fahrzeugrahmen, einen Fahrzeugunterboden oder Kombination hiervon auf. Ein Anbindungselement ist beispielsweise ausgebildet wenigstens als eine formschlüssige Verbindungsaufnahme, wie beispielweise ausgewählt aus einer Verbindungsöffnung, insbesondere einer Bohrung, einer Gewindebohrung, einer Aussparung, eines Langlochs oder eine Kombination hiervon.

In einer bevorzugten Ausführungsform der Erfindung weist der Innenbereich eine geometrische Ausformung, insbesondere mindestens eine Erhebung, mindestens eine Vertiefung und/oder mindestens eine wenigstens teilweise umlaufende Kontur zur formschlüssigen Sicherung eines in dem Innenbereich angeordneten elastischen Einlegeelements auf. Eine geometrische Ausformung ist beispielsweise ausgewählt aus einer Noppe, einer Rastnase, einer Rille, eines Wulstes, eines Kragens oder eine Kombination hiervon.

Im Rahmen der vorliegenden Erfindung wird unter einem Einlegeelement ein Element verstanden, welches eine Stabilisatorschelle, in welche es eingelegt ist und einen Stabilisator, welcher wenigstens teilweise von dem Einlegeelement der um den Stabilisator angeordneten Stabilisatorschelle umfasst ist elastisch verbindet. Beispielsweise ist ein Einlegeelement als ein elastisches Lager, insbesondere ein Gummilager zur Lagerung eines Stabilisators ausgebildet. Ein Einlegeelement kann beispielsweise auch als ein Einschubelement ausgebildet sein.

Nach einer bevorzugten Ausführungsform der Erfindung weist die Stabilisatorschelle eine Beschichtung, insbesondere ausgebildet als eine Opferbeschichtung, beispielsweise eine Zink-Nickel-Beschichtung auf.

Unter einer Opferbeschichtung wird im Rahmen der vorliegenden Erfindung eine Beschichtung zum Korrosionsschutz verstanden. Insbesondere schützt die Opferbeschichtung die Stabilisatorschelle auf welche die Opferbeschichtung aufgetragen ist und die Opferbeschichtung selbst bei korrosiver Umgebung geopfert.

Gemäß einer bevorzugten Ausführungsform der Erfindung wird die in Schritt g) hergestellte wenigstens formschlüssige Verbindung zusätzlich als eine kraftschlüssige Verbindung ausgebildet.

In einer bevorzugten Ausführungsform der Erfindung ist die mindestens eine Niet der in Schritt a) bereitgestellten Stabilisatorschelle einstückig mit der Stabilisatorschelle ausgebildet.

Im Rahmen der vorliegenden Erfindung wird unter einstückig verstanden, dass kein Stück zerstörungsfrei in mehrere Stücke geteilt werden kann.

### Kurze Beschreibung der Zeichnungen

Die erfindungsgemäße Stabilisatorschelle als auch Stabilisator-Stabilisatorschellen-Anordnung wird anhand der Zeichnung erläutert.
- Fig. 1: zeigt schematisch eine dreidimensionale Ansicht einer Stabilisatorschelle 1 gemäß einer Ausführungsform der Erfindung in einem offenen Zustand,
- Fig. 2: zeigt schematisch eine dreidimensionale Ansicht einer Stabilisatorschelle 1 nach Figur 1 in einem geschlossenen Zustand,
- Fig. 3: zeigt schematisch eine dreidimensionale Ansicht einer Stabilisatorschelle 1 gemäß einer weiteren Ausführungsform der Erfindung,
- Fig. 4: zeigt schematisch eine dreidimensionale Ansicht einer Stabilisatorschelle 1 gemäß einer weiteren Ausführungsform der Erfindung,
- Fig. 5: zeigt schematisch eine dreidimensionale Ansicht einer Stabilisatorschelle 1 gemäß einer weiteren Ausführungsform der Erfindung,
- Fig. 6: zeigt schematisch eine dreidimensionale Ansicht einer Stabilisatorschelle 1 gemäß einer weiteren Ausführungsform der Erfindung,
- Fig. 7: zeigt schematisch eine dreidimensionale Ansicht einer Stabilisator-Stabilisatorschelle 1nAnordnung gemäß einer Ausführungsform der Erfindung.

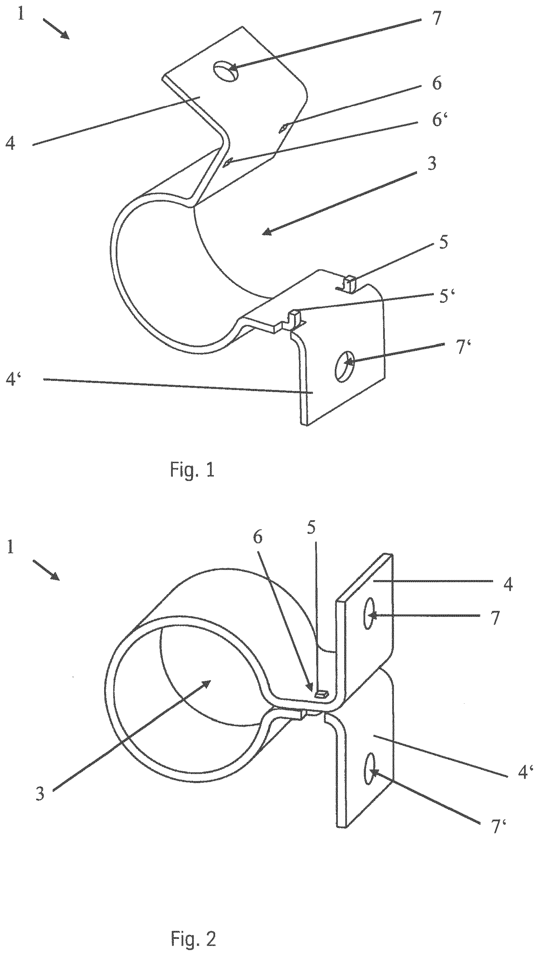

In der Fig. 1 ist eine Ausführungsform der erfindungsgemäßen Stabilisatorschelle 1 in einem geöffneten Zustand für einen (Fahrzeug)stabilisator 2 dargestellt. Die Stabilisatorschelle 1 ist einteilig ausgebildet und umfasst einen Innenbereich 3 und 2 sich wenigstens teilweise gegenüberliegende Endbereiche 4, 4'. Ein Endbereich 4, 4' weist 2 Verbindungselemente 5,5', dargestellt als Nieten auf, welcher beim Schließen der Stabilisatorschelle 1 in die Verbindungselementaufnahmen 6, 6' dargestellt als Nietlöcher des gegenüberliegenden anderen Endbereiches 4,4' münden. Zum Anschluss an ein Fahrzeug, insbesondere Fahrwerk umfassen die Endbereiche 4, 4' jeweils Anbindungselemente 7,7'.

In der Fig. 2 ist die erfindungsgemäße Stabilisatorschelle 1 nach Fig. 1 im geschlossenen Zustand dargestellt. Im geschlossenen Zustand sind insbesondere die Verbindungselemente 5 durch die Verbindungselementaufnahme 6 hindurchgeführt.

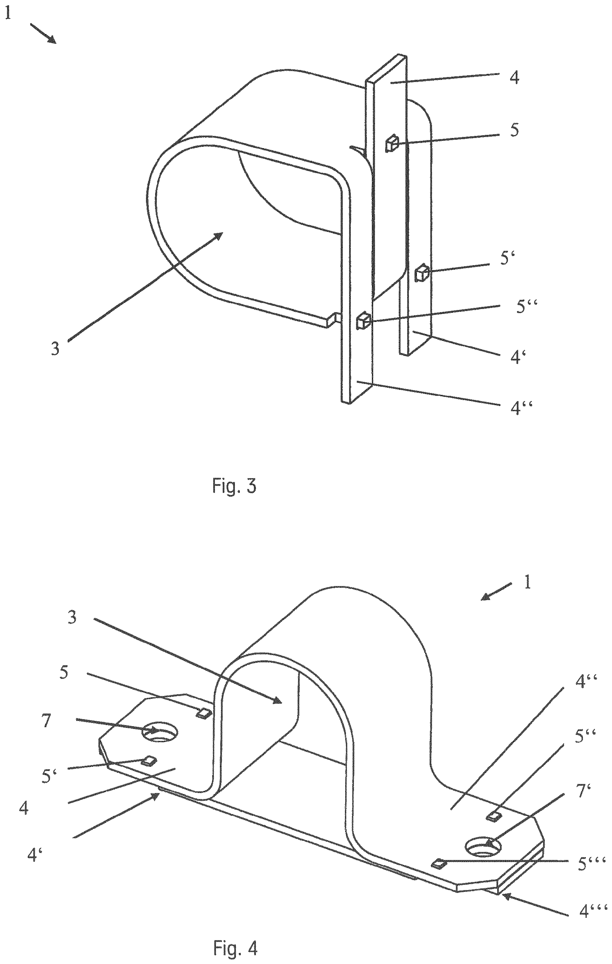

In der Fig. 3 ist eine weitere Ausführungsform der erfindungsgemäßen Stabilisatorschelle 1 für einen (Fahrzeug)stabilisator 2 in einem geschlossenen Zustand dargestellt. Die Stabilisatorschelle 1 ist einteilig ausgebildet, umfasst einen Innenbereich 3 und mehrere Endbereiche 4,4' und 4". Die Verbindungselemente 5,5'und 5" sind wechselseitig angeordnet.

In der Fig. 4 ist eine weitere Ausführungsform der erfindungsgemäßen Stabilisatorschelle 1 für einen (Fahrzeug)stabilisator 2 in einem geschlossenen Zustand dargestellt. Die Stabilisatorschelle 1 ist zweiteilig ausgebildet, umfasst einen Innenbereich 3 und die Endbereich 4,4' 4" und 4‴. Die Verbindungselemente 5,5', 5" und 5'" sind durch die gegenüberliegend angeordneten Verbindungselementaufnahmen hindurchgeführt. Zum Anschluss an ein Fahrzeug, insbesondere Fahrwerk umfassen die Endbereiche 4,4' 4" und 4‴ Anbindungselemente 7,7'.

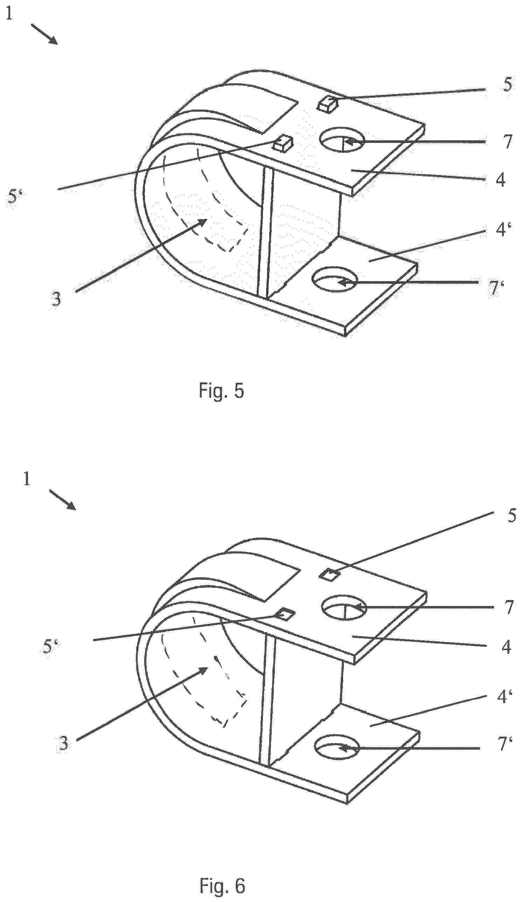

In der Fig. 5 ist eine weitere Ausführungsform der erfindungsgemäßen Stabilisatorschelle 1 für einen (Fahrzeug)stabilisator 2 in einem geschlossenen Zustand dargestellt. Die Stabilisatorschelle 1 ist zweiteilig ausgebildet, umfasst einen Innenbereich 3 und die Endbereich 4,4'. Die Verbindungselemente 5,5' sind durch die gegenüberliegend angeordneten Verbindungselementaufnahmen (6,6') hindurchgeführt. Zum Anschluss an ein Fahrzeug, insbesondere Fahrwerk umfassen die Endbereiche 4,4' Anbindungselemente 7,7'. Die Stabilisatorschelle 1 weist zur Aufnahme eines Einlegeelements (8) eine geometrische Ausformung im Innenbereich 3 auf.

In der Fig. 6 ist eine erfindungsgemäße Ausführungsform der Stabilisatorschelle 1 nach Fig. 5 dargestellt, jedoch ist die Verbindung zwischen den in den Verbindungselementaufnahmen (6,6') aufgenommenen Verbindungselemente 5,5' vermietet.

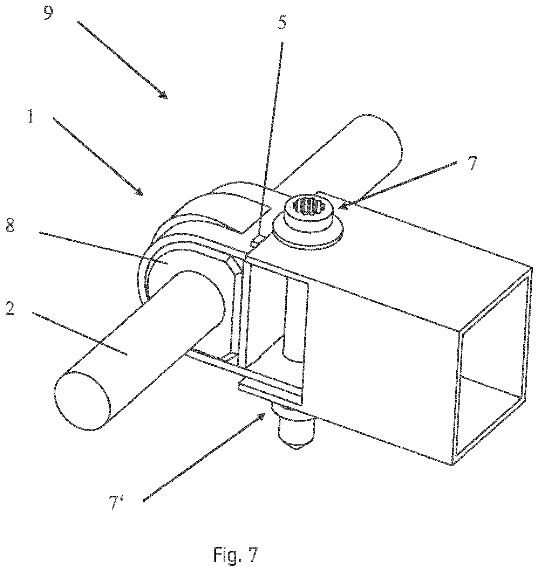

In der Fig. 7 ist einer Stabilisator-Schellen-Anordnung 9 umfassend eine Stabilisatorschelle 1 und einen darin angeordneten (Fahrzeug)Stabilisator 2, dargestellt. Zwischen dem Stabilisator 2 und der Stabilisatorschelle 1 ist ein Einlegeelement 8 angeordnet. Insbesondere ist der Stabilisator 2 über das Einlegeelement 8 in der Stabilisatorschelle 1 gelagert. Über ein Anbindungselement 7,7' ist die Stabilisator-Stabilisator Schellen-Anordnung 9, insbesondere die Stabilisatorschelle 1 angebunden an ein Fahrzeugelement, insbesondere eine Befestigung an einem Fahrwerk.

### Gewerbliche Anwendbarkeit

Stabilisatorschelle als auch Stabilisator-Stabilisatorschellen-Anordnung als auch Verfahren zum Herstellen einer Stabilisator-Stabilisatorschellen-Anordnung der vorbeschriebenen Art werden in der Produktion von Fahrzeugen, insbesondere von Fahrwerken von Kraft- und/oder Schienenfahrzeugen eingesetzt.

### Bezugszeichenliste

- 1: = Stabilisatorschelle
- 2: = (Fahrzeug)stabilisator
- 3: = Innenbereich
- 4, 4', 4": = Endbereiche
- 5, 5', 5", 5‴: = Verbindungselement
- 6, 6', 6", 6‴: = Verbindungselementaufnahme
- 7, 7': = Anbindungselement
- 8: = Einlegeelement
- 9: = Stabilisator-Stabilisatorschellen-Anordnung

## Patentansprüche

1. Stabilisatorschelle (1) für einen Fahrzeugstabilisator (2), umfassend einen Innenbereich (3) zur Aufnahme für einen Fahrzeugstabilisator (2) und mindestens zwei sich wenigstens teilweise gegenüberliegende Endbereiche (4, 4', 4") zum Schließen der Stabilisatorschelle (1), wobei der eine der mindestens zwei sich wenigstens teilweise gegenüberliegenden Endbereiche (4, 4', 4") mindestens ein Verbindungselement (5, 5', 5", 5‴) und der andere der mindestens zwei sich wenigstens teilweise gegenüberliegenden Endbereiche (4, 4', 4") mindestens eine Verbindungselementaufnahme (6, 6', 6", 6‴) zur Herstellung wenigstens einer formschlüssigen Verbindung zwischen dem mindestens einem Verbindungselement (5, 5', 5", 5‴) und der mindestens einen Verbindungselementaufnahme (6, 6', 6", 6‴) aufweist,
wobeidas mindestens eine Verbindungselement (5, 5', 5", 5‴) mindestens eine Niet und die mindestens eine Verbindungselementaufnahme (6, 6', 6", 6‴) mindestens ein Nietloch ist und die herstellbare wenigstens formschlüssige Verbindung wenigstens eine Nietverbindung ist;
wobei die mindestens eine Niet einstückig mit der Stabilisatorschelle (1) ausgebildet ist, **dadurch gekennzeichnet, dass**
die mindestens eine Niet massiv ausgebildet ist.

2. Stabilisatorschelle (1) nach Anspruch 1, **dadurch gekennzeichnet, dass** die Stabilisatorschelle (1) mindestens zwei Niete und mindestens zwei Nietlöcher aufweist, wobei die mindestens zwei Niete und die mindestens zwei Nietlöcher jeweils gleichseitig oder wechselseitig angeordnet sind.

3. Stabilisatorschelle (1) nach einem der Ansprüche 1 bis 2, **dadurch gekennzeichnet, dass** die Nietverbindung zusätzlich als eine kraftschlüssige Verbindung ausgebildet ist

4. Stabilisatorschelle (1) nach einem der Ansprüche 1 bis 3, **dadurch gekennzeichnet, dass** wenigstens einer der mindestens zwei sich wenigstens teilweise gegenüberliegenden Endbereiche (4, 4', 4") mindestens ein Anbindungselement (7, 7') zur Anbindung an ein Fahrzeug aufweist.

5. Stabilisatorschelle (1) nach einem der Ansprüche 1 bis 4, **dadurch gekennzeichnet, dass** der Innenbereich (3) eine geometrische Ausformung, insbesondere mindestens eine Erhebung und/oder mindestens eine Vertiefung zur formschlüssigen Sicherung eines in dem Innenbereich (3) angeordneten elastischen Einlegeelements (8) aufweist.

6. Stabilisatorschelle (1) nach einem der Ansprüche 1 bis 5, **dadurch gekennzeichnet, dass** die Stabilisatorschelle (1) eine Beschichtung, insbesondere ausgebildet als eine Opferbeschichtung aufweist.

7. Stabilisator-Stabilisatorschellen-Anordnung umfassend einen Stabilisator (2), ein Einlegeelement (8) und eine Stabilisatorschelle (1) nach einem der Ansprüche 1 bis 6, wobei im Innenbereich (3) der Stabilisatorschelle (1) das Einlegelement (8) und der Stabilisator (2) koaxial angeordnet sind, wobei das Einlegelement (8) den Stabilisator (2) wenigstens teilweise umgibt.

8. Verfahren zum Herstellen einer Stabilisator-Stabilisatorschellen-Anordnung (9) umfassend die folgenden Schritte:
a) Bereitstellen einer Stabilisatorschelle (1) nach einem der Ansprüche 1 bis 6, die Stabilisatorschelle (1) wenigstens umfassend einen Innenbereich (3) zur Aufnahme für einen Fahrzeugstabilisator (2) und mindestens zwei sich wenigstens teilweise gegenüberliegende Endbereiche (4, 4', 4") zum Schließen der Stabilisatorschelle (1), wobei der eine der mindestens zwei sich wenigstens teilweise gegenüberliegenden Endbereiche (4, 4', 4") mindestens ein Verbindungselement (5, 5', 5", 5‴) und der andere der mindestens zwei sich wenigstens teilweise gegenüberliegenden Endbereiche (4, 4', 4") mindestens eine Verbindungselementaufnahme (6, 6', 6", 6‴) zur Herstellung wenigstens einer formschlüssigen Verbindung zwischen dem mindestens einem Verbindungselement (5, 5', 5", 5‴) und der mindestens einen Verbindungselementaufnahme (6, 6', 6", 6‴) aufweist, wobei das mindestens eine Verbindungselement (5, 5', 5", 5‴) mindestens eine Niet und die mindestens eine Verbindungselementaufnahme (6, 6', 6", 6‴) mindestens ein Nietloch ist;
b) Bereitstellen eines Stabilisators (2) für ein Fahrzeug, insbesondere ein Kraftfahrzeug;
c) Bereitstellen mindestens eines elastischen Einlegeelements (8);
d)
i. Einlegen des in Schritt c) bereitgestellten mindestens einen elastischen Einlegeelements (8) in den Innenbereich (3) der in Schritt a) bereitgestellten Stabilisatorschelle (1) unter Herstellung einer Stabilisatorschelle (1) mit Einlage, oder
ii.Anordnen des in Schritt c) bereitgestellten mindestens einen elastischen Einlegeelements (8) an dem in Schritt b) bereitgestellten Stabilisator (2) unter Herstellung einer Stabilisator (2) mit angeordneter Einlage;
e)
i. Anordnen der in Schritt d)i. hergestellten Stabilisatorschelle (1) mit Einlage um den in Schritt b) bereitgestellten Stabilisator (2), oder
ii.Anordnen der in Schritt a) bereitgestellten Stablisatorschelle um den in Schritt d)ii. hergestellten Stabilisator (2) mit angeordneter Einlage;
f) Schließen der in Schritt e)i. oder e)ii. um den Stabilisator (2) und das mindestens eine elastische Einlegeelement (8) angeordneten Stabilisatorschelle (1), wobei die mindestens zwei sich wenigstens teilweise gegenüberliegenden Endbereiche (4, 4', 4") der Stabilisatorschelle (1) derart angeordnet werden, dass die mindestens eine Niet in das mindestens eine Nietloch eingeführt ist;
g) Vernieten der in Schritt f) in das mindestens eine Nietloch eingeführten Niet unter Herstellung einer wenigstens formschlüssigen Verbindung.

9. Verfahren zum Herstellen einer Stabilisator-Stabilisatorschellen-Anordnung (9) nach Anspruch 8, **dadurch gekennzeichnet, dass** die in Schritt g) hergestellte wenigstens formschlüssige Verbindung zusätzlich als eine kraftschlüssige Verbindung ausgebildet wird.

10. Verwendung eines Stabilisators (2) und einer Stabilisatorschelle (1) nach einem der Ansprüche 1 bis 6, insbesondere Fahrzeugstabilisators (2) zur Anordnung der Stabilisatorschelle (1) nach einem der Ansprüche 1 bis 6.

## Claims

1. A stabilizer clamp (1) for a vehicle stabilizer (2), comprising an inner region (3) for receiving a vehicle stabilizer (2) and at least two at least partially opposite end regions (4, 4', 4") for closing the stabilizer clamp (1), wherein the one of the at least two at least partially opposite end regions (4, 4', 4") has at least one connecting element (5, 5', 5", 5‴), and the other of the at least two at least partially opposite end regions (4, 4', 4") has at least one connecting element receptacle (6, 6', 6", 6‴) for producing at least a form-fitting connection between the at least one connecting element (5, 5', 5", 5‴) and the at least one connecting element receptacle (6, 6', 6", 6‴),
wherein
the at least one connecting element (5, 5', 5", 5‴) is at least one rivet, and the at least one connecting element receptacle (6, 6', 6", 6‴) is at least one rivet hole, and the at least form-fitting connection which can be produced is at least one riveted connection;
wherein the at least one rivet is formed in one piece with the stabilizer clamp (1), **characterized in that**
the at least one rivet is solid in form.

2. The stabilizer clamp (1) as claimed in claim 1, **characterized in that** the stabilizer clamp (1) has at least two rivets and at least two rivet holes, wherein the at least two rivets and the at least two rivet holes each have a like-sided or alternate-sided arrangement.

3. The stabilizer clamp (1) as claimed in one of claims 1 to 2, **characterized in that** the riveted connection additionally takes the form of a force-fitting connection.

4. The stabilizer clamp (1) as claimed in one of claims 1 to 3, **characterized in that** at least one of the at least two at least partially opposite end regions (4, 4', 4") has at least one attachment element (7, 7') for attaching to a vehicle.

5. The stabilizer clamp (1) as claimed in one of claims 1 to 4, **characterized in that** the inner region (3) has a geometrical formation, in particular at least one elevation and/or at least one depression for form-fittingly securing an elastic insert element (8) arranged in the inner region (3).

6. The stabilizer clamp (1) as claimed in one of claims 1 to 5, **characterized in that** the stabilizer clamp (1) has a coating, in particular taking the form of a sacrificial coating.

7. A stabilizer-stabilizer clamp assembly comprising a stabilizer (2), an insert element (8) and a stabilizer clamp (1) as claimed in one of claims 1 to 6, wherein the insert element (8) and the stabilizer (2) are arranged coaxially in the inner region (3) of the stabilizer clamp (1), wherein the insert element (8) at least partially surrounds the stabilizer (2).

8. A method for producing a stabilizer-stabilizer clamp assembly (9), comprising the following steps:
a) providing a stabilizer clamp (1) as claimed in one of claims 1 to 6, the stabilizer clamp (1) at least comprising an inner region (3) for receiving a vehicle stabilizer (2) and at least two at least partially opposite end regions (4, 4', 4") for closing the stabilizer clamp (1), wherein the one of the at least two at least partially opposite end regions (4, 4', 4") has at least one connecting element (5, 5', 5", 5‴), and the other of the at least two at least partially opposite end regions (4, 4', 4") has at least one connecting element receptacle (6, 6', 6", 6‴) for producing at least one form-fitting connection between the at least one connecting element (5, 5', 5", 5‴) and the at least one connecting element receptacle (6, 6', 6", 6‴), wherein the at least one connecting element (5, 5', 5", 5‴) is at least one rivet, and the at least one connecting element receptacle (6, 6', 6", 6‴) is at least one rivet hole;
b) providing a stabilizer (2) for a vehicle, in particular a motor vehicle;
c) providing at least one elastic insert element (8);
d)
i. inserting the at least one elastic insert element (8) provided in step c) into the inner region (3) of the stabilizer clamp (1) provided in step a) so as to produce a stabilizer clamp (1) with insert, or
ii.arranging the at least one elastic insert element (8) provided in step c) on the stabilizer (2) provided in step b) so as to produce a stabilizer (2) with arranged insert;
e)
i. arranging the stabilizer clamp (1) with insert that is produced in step d)i. around the stabilizer (2) provided in step b), or
ii.arranging the stabilizer clamp provided in step a) around the stabilizer (2) with arranged insert that is produced in step d)ii.;
f) closing the stabilizer clamp (1) arranged in step e)i. or e)ii. around the stabilizer (2) and the at least one elastic insert element (8), wherein the at least two at least partially opposite end regions (4, 4', 4") of the stabilizer clamp (1) are arranged in such a way that the at least one rivet is inserted into the at least one rivet hole;
g) riveting the rivet inserted in step f) into the at least one rivet hole so as to produce an at least form-fitting connection.

9. The method for producing a stabilizer-stabilizer clamp assembly (9) as claimed in claim 8, **characterized in that** the at least form-fitting connection produced in step g) additionally takes the form of a force-fitting connection.

10. The use of a stabilizer (2) and a stabilizer clamp (1) according to any of claim 1 to 6, in particular vehicle stabilizer (2), for arranging the stabilizer clamp (1) as claimed in one of claims 1 to 6.

## Revendications

1. Bride de stabilisateur (1) destinée à un stabilisateur de véhicule (2), ladite bride comprenant une zone intérieure (3) destinée à recevoir un stabilisateur de véhicule (2) et au moins deux zones d'extrémité (4, 4', 4") au moins partiellement opposées destinées à fermer la bride de stabilisateur (1), l'une des au moins deux zones d'extrémité (4, 4', 4") au moins partiellement opposées comportant au moins un élément de liaison (5, 5', 5", 5‴) et l'autre des au moins deux zones d'extrémité (4, 4', 4") au moins partiellement opposées comportant au moins un réceptacle d'élément de liaison (6, 6', 6", 6‴) destiné à réaliser au moins une liaison par complémentarité de formes entre l'au moins un élément de liaison (5, 5', 5", 5‴) et l'au moins un réceptacle d'élément de liaison (6, 6', 6", 6‴), l'au moins un élément de liaison (5, 5', 5", 5‴) étant au moins un rivet et l'au moins un réceptacle d'élément de liaison (6, 6', 6", 6‴) étant au moins un trou de rivet et la liaison au moins par complémentarité de forme réalisable étant au moins une liaison par rivet ;
l'au moins un rivet étant formé d'une seule pièce avec la bride de stabilisateur (1),
**caractérisée en ce que**
l'au moins un rivet est plein.

2. Bride de stabilisateur (1) selon la revendication 1, **caractérisée en ce que** la bride de stabilisateur (1) comporte au moins deux rivets et au moins deux trous de rivet, les au moins deux rivets et les au moins deux trous de rivet étant disposés du même côté ou en alternance.

3. Bride de stabilisateur (1) selon l'une des revendications 1 à 2, **caractérisée en ce que** la liaison par rivet est en outre réalisée sous la forme d'une liaison en force.

4. Bride de stabilisateur (1) selon l'une des revendications 1 à 3, **caractérisée en ce qu'**au moins une des au moins deux zones d'extrémité (4, 4', 4") au moins partiellement opposées comporte au moins un élément de liaison (7, 7') destiné au raccordement à un véhicule.

5. Bride de stabilisateur (1) selon l'une des revendications 1 à 4, **caractérisée en ce que** la zone intérieure (3) présente une forme géométrique, notamment au moins une surélévation et/ou au moins une dépression destinée à la fixation par complémentarité de formes d'un élément d'insertion élastique (8) disposé dans la zone intérieure (3).

6. Bride de stabilisateur (1) selon l'une des revendications 1 à 5, **caractérisée en ce que** la bride de stabilisateur (1) comporte un revêtement, notamment conçu comme un revêtement sacrificiel.

7. Ensemble stabilisateur-bride de stabilisateur comprenant un stabilisateur (2), un élément d'insertion (8) et une bride de stabilisateur (1) selon l'une des revendications 1 à 6, l'élément d'insertion (8) et le stabilisateur (2) étant disposés coaxialement dans la zone intérieure (3) de la bride de stabilisateur (1), l'élément d'insertion (8) entourant au moins partiellement le stabilisateur (2).

8. Procédé de fabrication d'un ensemble stabilisateur-bride de stabilisateur (9), ledit procédé comprenant les étapes suivantes :
a) fournir une bride de stabilisateur (1) selon l'une des revendications 1 à 6, la bride de stabilisateur (1) comprenant au moins une zone intérieure (3) destinée à recevoir un stabilisateur de véhicule (2) et au moins deux zones d'extrémité (4, 4', 4"), au moins partiellement opposées, destinées à fermer la bride de stabilisateur (1), l'une des au moins deux zones d'extrémité (4, 4', 4") au moins partiellement opposées comportant au moins un élément de liaison (5, 5', 5", 5‴) et l'autre des au moins deux zones d'extrémité (4, 4', 4") au moins partiellement opposées comportant au moins un réceptacle d'élément de liaison (6, 6', 6", 6‴) destiné à la réalisation d'au moins une liaison par complémentarité de formes entre l'au moins un élément de liaison (5, 5', 5", 5‴) et l'au moins un réceptacle d'élément de liaison (6, 6', 6", 6‴), l'au moins un élément de liaison (5, 5', 5", 5‴) étant au moins un rivet et l'au moins un réceptacle d'élément de liaison (6, 6', 6", 6‴) étant au moins un trou de rivet ;
b) fournir un stabilisateur (2) destiné à un véhicule, notamment un véhicule automobile ;
c) fournir au moins un élément d'insertion élastique (8) ;
d)
i. insérer l'au moins un élément d'insertion élastique (8), fourni à l'étape c), dans la zone intérieure (3) de la bride de stabilisateur (1), fournie à l'étape a), pour réaliser une bride de stabilisateur (1) pourvue d'un insert, ou ii.disposer l'au moins un élément d'insertion élastique (8), fourni à l'étape c), sur le stabilisateur (2), fourni à l'étape b), pour réaliser un stabilisateur (2) pourvu d'un insert disposé ;
e)
i. disposer la bride de stabilisateur (1), réalisée à l'étape d)i et pourvue de l'insert, autour du stabilisateur (2) fourni à l'étape b), ou
ii.disposer la bride de stabilisateur, fournie à l'étape a), autour du stabilisateur (2) réalisé à l'étape d)ii et pourvu de l'insert disposé ;
f) fermer la bride de stabilisateur (1) disposée à l'étape e)i. ou e)ii autour du stabilisateur (2) et de l'au moins un élément d'insertion élastique (8), les au moins deux zones d'extrémité (4, 4', 4"), au moins partiellement opposées, de la bride de stabilisateur (1) étant disposées de manière que l'au moins un rivet soit introduit dans l'au moins un trou de rivet ;
g) riveter le rivet introduit dans l'au moins un trou de rivet à l'étape f) pour réaliser au moins une liaison par complémentarité de formes.

9. Procédé de réalisation d'un ensemble stabilisateur-bride de stabilisateur (9) selon la revendication 8, **caractérisé en ce que** la liaison au moins par complémentarité de formes réalisée à l'étape g) est en outre conçue comme une liaison en force.

10. Utilisation d'un stabilisateur (2) et d'une bride de stabilisateur (1) selon l'une des revendications 1 à 6, notamment un stabilisateur de véhicule (2) pour disposer la bride de stabilisateur (1) selon l'une des revendications 1 à 6.
